# EUROPEAN PATENT APPLICATION

(11) **EP 0 965 272 A1**
(43) Date of publication of application: **22.12.1999**
(21) Application number: 98110852.5
(22) Date of filing: 13.06.1998
(51) Int. Cl.: A23B 7/04, A23L 3/015

(54) **A process for decreasing the discoloration of vegetables**

(71) Applicant: SOCIETE DES PRODUITS NESTLE S.A., 1800 Vevey (CH)
(72) Inventor: Sundara, Venkata-Ramana, 1012 Lausanne (CH)
(74) Representative: Thomas, Alain

(57) **Abstract**

The invention concerns a process for decreasing the discoloration of vegetables, wherein
a) the fresh vegetables are submerged in water,
b) the obtained mixture with water is degassed,
c) said mixture is flushed with nitrogen to bring back the system to atmospheric pressure and
d) the treated vegetables are drained and frozen.

## Description

The invention concerns a process for decreasing the discoloration of vegetables.

The GB Patent No. 936'194 concerns a process for treating a liquid-containing food product, more particularly spinach, which process comprises blanching the product by heating, mechanical pulping said product, introducing the liquidised product into an enclosed vessel in which a sub-atmospheric pressure is maintained whereby gas contained in the product is removed and finally deep freezing said liquidised food product. The problem at the base of this invention is that when this food product is thawed, it is of bad quality and has no fresh look. This is due to the fact that mechanical pulping or freezing /thawing brings about enzymatic browning which involves polyphenols, polyphenol oxidases and oxygen. Therefore, heat treatment (blanching) is carried out to inactivate enzyme. But, such heat treatment alters colour and texture of the product.

The objective of the present invention is to have a process, wherein the availability of oxygen in the tissue is minimised, the color and the texture of the frozen vegetables are protected and any mechanical and thermal stress are avoided until further use.

The present invention concerns a process for decreasing the discoloration of vegetables, wherein
a) the fresh vegetables are submerged in water,
b) the obtained mixture with water is degassed,
c) said mixture is flushed with nitrogen to bring back the system to atmospheric pressure and
d) the treated vegetables are drained and frozen.

The aim of the present invention is to develop a process with a mild treatment of the vegetables, allowing to obtain an acceptable thawed product for the consumer.

The type of vegetables which can be treated according to the invention is not critical. Normally, green vegetables are treated, to maintain first the chlorophyll and secondly the original colours. Under green vegetables, we understand spinach, beans, broccoli and equivalent vegetables. Under vegetables, we understand also aromatic herbs, such as rosmary, sage, parsley, basil, for example which can be then used for the preparation of a pesto sauce or other types of sauce.

The vegetables are submerged in water, which is at room temperature. The fresh vegetable in the present specification means that there are in the form of raw material, not blanched. These vegetables can be either in their intact form, for example for the basil, or in the cut form, in the case of broccoli and beans.

The essential feature of the present invention is to degas the mixture of water and vegetables in order to remove the tissue gases and simultaneously to fill the intercellular spaces with water. The level of degassing is comprised between 300 and 400 mbar, which is a very mild vacuum : atmospheric pressure is at 942 mbar. The time for this degassing is normally comprised between 2 and 10 minutes and more preferably between 4 and 6 minutes. The device used for degassing is a classical vacuum pump. After the vacuum treatment, nitrogen gas is introduced in the vessel containing the water and the vegetables to bring back the system to the atmospheric pressure.

The draining of the treated vegetables occurs by a classical gravity treatment. The obtained vegetables are then frozen at a temperature of the order of -15 to - 20°C , and packed in plastic or aluminium bags.

The objects of the present invention will become apparent in the following examples.

### Example 1 to 3

The green pieces of basil leaves were kept immersed in water with the help of the perforated weight in a dessicator. The inlet valve, for the nitrogen gas, was kept close. Intercellular gases from plant tissue were then removed by reducing the pressure inside the dessicator with a vacuum pump. Liberation of gas bubbles from vegetable tissues could be observed. The sub-atmospheric pressure inside the dessicator and time required for complete removal of tissue gases were different for different vegetables. The ideal conditions for basil leaves were 400 mbar inside the dessicator for 4 min. and for broccoli and green beans, 300 mbar inside the dessicator for 6 mm. At the end of vacuum treatment, vegetable samples were brought back to atmospheric pressure by gently allowing nitrogen into the dessicator through the inlet valve. Vegetable samples were taken out of the dessicator, drained to remove surface water, then packed in aluminium foil/polyethylene laminate bags and stored at -18 °C.

### Comparative examples 4 to 6

In separate experiments, fresh basil leaves were blanched in boiling water for 2 minutes to inactivate enzymes. Similarly, broccoli and green beans were blanched for 4 minutes in boiling water. Untreated (examples 4 to 6) and blanched samples (examples 7 to 9) were individually packed in aluminium foil/polyethylene laminate bags and stored at -18 °C.

### Results

Two main analysis were made : The pigment analysis and the texture measurements.
Concerning the first analysis, frozen basil, green beans and broccoli were thawed overnight at 4 °C. The samples were ground in an Ultra Turrax. Two grams of ground material was mixed with 9 ml acetone in a tube and centrifuged . The supernatant was transferred to a 20 ml flask. The solution was filtered for HPLC analysis. Chlorophyll and its degradation products were analyzed using an HPLC Kontron system.
Blanching in boiling water degraded chlorophyll to pheophytin a and b. When basil, green beans and broccoli were subjected to degassing treatment before freezing according to the invention, chlorophyll degradation was less as compared to blanching. Chlorophyll content were little affected during storage.

Concerning the second analysis, these measurements were performed using a Texture analyzer TA-XT2 (Haslemere, Surrey, England). Green beans and broccoli pieces of 8 mm thick were placed in a cylinder. The F values corresponding to 25 % strain in the samples were calculated from force deformation curves.
The results are given in the following table.

| F (Kg) | Beans | Broccoli |
|---|---|---|
| Untreated | 21 | 9.4 |
| Blanched | 8 | 6.1 |
| Invention | 19.5 | 9.3 |

As clearly shown in these results, the firmness of the vegetables obtained according to the invention are very near the firmness of untreated and fresh vegetables. On the contrary, if the vegetables has been blanched or heat treated the tissue firmness is decreased.

## Claims

1. A process for decreasing the discoloration of vegetables, wherein
a) the fresh vegetables are submerged in water,
b) the obtained mixture with water is degassed,
c) said mixture is flushed with nitrogen to bring back the system to atmospheric pressure and
d) the treated vegetables are drained and frozen.

2. A process according to claim 1, wherein the vegetables are taken in the group consisting of basil, broccoli , spinach, aromatic herbs and beans.

3. A process according to claims 1 or 2, wherein the vegetables are in the form of raw material, not blanched.

4. A process according to any of claims 1 to 3, wherein the mixture with water is degassed at a level comprised between 300 and 400 mbar.

5. A process according to any of claims 1 to 4, wherein the mixture with water is degassed during 2 to 10 minutes, preferably between 4 to 6 minutes.
